# EUROPÄISCHE PATENTANMELDUNG

(11) **EP 3 819 279 A1**
(43) Veröffentlichungstag der Anmeldung: **12.05.2021**
(21) Anmeldenummer: 19207659.4
(22) Anmeldetag: 07.11.2019
(51) Int. Cl.: C04B 40/00

(54) **ALUMINIUMSULFATSUSPENSIONEN MIT REDUZIERTER VISKOSITÄT**

(71) Anmelder: SIKA TECHNOLOGY AG, 6340 Baar (CH)
(72) Erfinder: Weibel, Martin, 8048 Zürich (CH); Stenger, Christian, 5024 Küttigen (CH)
(74) Vertreter: Sika Patent Attorneys

(57) **Zusammenfassung**

Die vorliegende Erfindung betrifft die Verwendung einer löslichen Magnesiumverbindung zur Einstellung, insbesondere zur Reduktion, der Viskosität einer Aluminiumsulfatsuspension.

## Beschreibung

### Technisches Gebiet

Die Erfindung betrifft Mittel zur Einstellung, insbesondere zur Reduktion, der Viskosität einer Aluminiumsulfatsuspension. Des Weiteren bezieht sich die Erfindung auf eine Aluminiumsulfatsuspension.

### Stand der Technik

Es sind viele Substanzen bekannt, welche das Erstarren und Erhärten von mineralischen Bindemittelzusammensetzungen beschleunigen. Bekannt sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, z.B. Verätzungen, auftreten und sie reduzieren die Endfestigkeit und die Dauerhaftigkeit des Betons.

Es werden daher mehrheitlich alkalifreie Beschleuniger eingesetzt, wobei sich unter anderem Beschleuniger auf Basis von Aluminiumsulfatsuspensionen als besonders effektiv herausgestellt haben. Problematisch bei solchen Beschleunigern ist jedoch, dass mit zunehmendem Aktivstoffgehalt, die Viskositäten der Beschleuniger stark zunehmen. Dies erschwert unter anderem das exakte Zudosieren der Beschleuniger und die Mischbarkeit mit den zu beschleunigenden mineralischen Bindemittelzusammensetzungen.

Die WO 2005/075381 A1 beschreibt z.B. einen Erstarrungs- und Erhärtungsbeschleuniger umfassend Aluminiumhydroxid, Aluminiumsulfat und organische Säure, wobei der Beschleuniger ein Molverhältnis von Aluminium zur organischen Säure von kleiner als 0.65 aufweist.

Die EP 0 812 812 B1 offenbart alkalifreie Beschleunigerdispersionen basierend auf Aluminiumsulfat und einem Alkanolamin in Abwesenheit von Aluminiumhydroxid.

Grosse Mengen an Säuren und Alkanolaminen haben jedoch den Nachteil, dass aufgrund ihrer Auswaschbarkeit die Umwelt belastet werden kann. Sie sind zudem wegen ihrer Kosten nachteilig.

Die EP 1 878 713 A1 (Construction Research and Technology GmbH) beschreibt einen Beschleuniger für Spritzbeton oder Spritzmörtel in Form einer wässrigen Dispersion mit 25 bis 40 Gew.-% Aluminiumsulfat und Aluminiumhydroxid, wobei das molare Verhältnis von Aluminium zu Sulfat in der Dispersion 1.35 bis 0.70 beträgt. Zudem weist die wässrige Dispersion einen anorganischen Stabilisator auf, der ein Magnesiumsilikat in Form von Sepiolith umfasst. Wird Sepiolith mit einem Anteil von 0.2 - 3 Gew.-% eingesetzt, ergibt sich gemäss der EP 1 878 713 A1 nebst einer Stabilisierung der Dispersion in weiten Bereichen der vorgesehenen Aluminium- und Sulfatmengen auch eine vorteilhafte Viskosität des Spritzbetonbeschleunigers.

Nachteilig bei solchen Beschleunigern ist aber, dass zur Erreichung des hohen Aktivstoffgehalts zusätzliches Aluminiumhydroxid zugegeben und das Verhältnis von Aluminium zu Sulfat angehoben werden muss, was teilweise unerwünscht ist. Dies führt dazu, dass die Kosten für den Beschleuniger relativ hoch ausfallen, da Aluminiumhydroxid teuer ist. Zudem ist das als Stabilisator eingesetzte Magnesiumsilikat in Form von Sepiolith zwar ein sehr guter Stabilisator für Spritzbetonbeschleuninger, Sepiolith hat sich aber hinsichtlich Viskositätsreduktion als nicht wirksam herausgestellt. Im Gegenteil, die Zugabe von Sepiolith führt direkt nach der Herstellung stets zu einer Viskositätserhöhung der Aluminiumsulfatsuspension.

Damit lassen sich die Aluminiumsulfatsuspensionen zwar bei relativ hohem Aktivstoffgehalt stabilisieren, die Viskositäten solcher Aluminiumsulfatsuspensionen, insbesondere direkt nach der Herstellung, können aber nicht positiv beeinflusst oder gezielt eingestellt werden.

Es besteht deshalb weiterhin das Bedürfnis, nach neuen und verbesserten Lösungen, welche die vorstehend genannten Nachteile möglichst überwinden.

### Darstellung der Erfindung

Der Erfindung liegt die Aufgabe zugrunde, Lösungen bereitzustellen, welche die Herstellung von Aluminiumsulfatsuspensionen mit möglichst hohem Gehalt an Aluminiumsulfat bei möglichst geringer Viskosität ermöglichen. Insbesondere wird eine geringe Viskosität direkt nach der Zugabe einer löslichen Magnesiumverbindung zur Aluminiumsulfatsuspension erreicht und bevorzugterweise bleibt eine geringe Viskosität auch zu späteren Zeiten nach der Zugabe einer löslichen Magnesiumverbindung zur Aluminiumsulfatsuspension erhalten. Dies im Besonderen ohne dabei das Verhältnis von Aluminium zu Sulfat zu beeinflussen und bevorzugt ohne die Wirksamkeit von anderen Komponenten der Aluminiumsulfatsuspension zu beeinträchtigen. Die Aluminiumsulfatsuspensionen sollen sich im Besonderen als möglichst effektive Erstarrungs- und/oder Erhärtungsbeschleuniger für hydraulische Bindemittel, im Besonderen für Spritzbeton oder Spritzmörtel, eigenen. Die Lösungen sollen des Weiteren möglichst kostengünstig und einfach umsetzbar sein.

Überraschenderweise wurde gefunden, dass die erfindungsgemässe Aufgabe durch die Verwendung gemäss Anspruch 1 gelöst werden kann.

Demnach wird eine lösliche Magnesiumverbindung zur Einstellung, insbesondere zur Reduktion, der Viskosität einer Aluminiumsulfatsuspension verwendet.

Wie sich gezeigt hat, kann durch die Verwendung einer löslichen Magnesiumverbindung die Viskosität einer Aluminiumsulfatsuspension bei gleichbleibendem Gehalt an Aluminiumsulfat signifikant reduziert werden und/oder der Gehalt an Aluminiumsulfat kann bei gleichbleibender Viskosität markant erhöht werden. Somit lassen sich in einfacher Art und Weise relativ kostengünstige Aluminiumsulfatsuspensionen mit hohem Gehalt an Aluminiumsulfat und zugleich relativ geringer Viskosität herstellen, welche sich im Besonderen als Erstarrungs- und Erhärtungsbeschleuniger für Spritzbeton und Spritzmörtel eignen. Die lösliche Magnesiumverbindung ist dabei im Besonderen im Zeitraum von 1 - 48 h, insbesondere 6 - 24 h, nach der Zugabe zu der Aluminiumsulfatsuspension wirksam. Weiter hat sich gezeigt, dass die lösliche Magnesiumverbindung auch zu späteren Zeiten, insbesondere 1 - 3 Monate nach der der Zugabe zu der Aluminiumsulfatsuspension, als Mittel zur Einstellung, insbesondere zur Reduktion, und/oder zur Aufrechterhaltung der Viskosität wirksam ist. Dies im Besonderen bei Aluminiumsulfatsuspensionen mit einem Anteil von > 34 Gew.-% Aluminiumsulfat (Al₂(SO₄)₃).

Aufgrund der Verwendung einer löslichen Magnesiumverbindung wird dabei das Verhältnis von Aluminium zu Sulfat nicht verändert.

Zudem kann die lösliche Magnesiumverbindung ohne weiteres mit herkömmlichen und stabilisierend wirkenden Magnesiumsilikaten, insbesondere mit Sepiolith, kombiniert werden, ohne dass die Wirksamkeit der löslichen Magnesiumverbindung beeinträchtigt würde. So können in einer Aluminiumsulfatsuspension bei Bedarf z.B. ein Magnesiumsilikat, insbesondere Sepiolith, in Kombination mit der löslichen Magnesiumverbindung verwendet werden, womit besonders stabile Aluminiumsulfatsuspension mit hohem Aktivstoffgehalt und geringer Viskosität erhältlich sind.

Des Weiteren kann bei Bedarf auf möglicherweise problematische und/oder teure Substanzen wie Alkaliverbindungen, Alkanolamine, Carbonsäuren, Aluminiumhydroxid verzichtet werden. Dies ohne signifikante Einbussen in Bezug auf die Beschleunigungswirkung in Kauf zu nehmen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die Erfindung die Verwendung einer löslichen Magnesiumverbindung zur Einstellung, insbesondere zur Reduktion, der Viskosität einer Aluminiumsulfatsuspension.

Eine "Aluminiumsulfatsuspension" ist ein heterogenes Stoffgemisch aus einer Flüssigkeit, insbesondere Wasser, und darin fein verteilten Partikeln aus Aluminiumsulfat. Bevorzugt handelt es sich um eine wässrige Aluminiumsulfatsuspension. Nebst dem Aluminiumsulfat in Partikelform kann ein Teil des Aluminiumsulfats auch in gelöster und/oder in chemisch umgewandelter Form vorliegen. Eine chemisch umgewandelte Form von Aluminiumsulfat ist z.B. Jurbanit (AlOHSO₄ · 5 H₂O). Zusätzlich zur Flüssigkeit und dem Aluminiumsulfat kann die Aluminiumsulfatsuspension weitere Komponenten enthalten, welche in gelöster und/oder fester Form vorliegen können.

Besonders bevorzugt ist die Aluminiumsulfatsuspension ein Erstarrungs- und/oder Erhärtungsbeschleuniger für ein mineralisches Bindemittel, insbesondere ein Spritzbetonbeschleuniger. Entsprechend wird die lösliche Magnesiumverbindung bevorzugt zur Einstellung der Viskosität eines auf einer Aluminiumsulfatsuspension basierenden Erstarrungs- und/oder Erhärtungsbeschleunigers für ein mineralisches Bindemittel, insbesondere für einen Spritzbetonbeschleuniger, verwendet.

Der Ausdruck "Erstarrungs- und/oder Erhärtungsbeschleuniger" steht insbesondere für eine Substanz, welche, falls einem mineralischen Bindemittel zugesetzt und verglichen mit einer Nullprobe ohne zugesetzte Substanz bzw. ohne Beschleuniger, zu einer Erhöhung der Druckfestigkeit des mineralischen Bindemittels nach einem definierten Zeitpunkt nach dem Anmachen führt, insbesondere zu einem Zeitpunkt innerhalb von 2 Minuten - 24 Stunden nach dem Anmachen.

Eine "lösliche Magnesiumverbindung" ist vorliegend eine Magnesiumverbindung, welche in destilliertem Wasser, das mit HCl auf einen pH = 4 eingestellt ist, bei 25°C und einem Druck von 1 bar mit mindestens 5 g pro 1 Liter löslich ist.

"Einstellung der Viskosität" bedeutet vorliegend insbesondere, dass die Viskosität der Aluminiumsulfatsuspension durch die lösliche Magnesiumverbindung gezielt kontrolliert und/oder eingestellt wird. Insbesondere wird die Viskosität der Aluminiumsulfatsuspension durch die Anwesenheit der löslichen Magnesiumverbindung gegenüber einer Aluminiumsulfatsuspension, welche die lösliche Magnesiumverbindung nicht enthält ansonsten aber identisch zusammengesetzt ist, verändert oder reduziert.

Die Viskosität wird insbesondere nach Norm DIN EN ISO 2431:2011 bestimmt. Bevorzugt mit einem ISO-Becher Nr. 6 und bei einer Temperatur von 23°C.

Gewichts- und Molanteile beziehen sich wo nicht anders angegeben jeweils auf die einsatzbereite Aluminiumsulfatsuspension nach erfolgter Einstellung der Viskosität. Die einsatzbereite Aluminiumsulfatsuspension ist insbesondere zur unmittelbaren Verwendung als Erstarrungs- und/oder Erhärtungsbeschleuniger ausgelegt. Die einsatzbereite Aluminiumsulfatsupension beinhaltet somit nebst dem Aluminiumsulfat und der Flüssigkeit auch die lösliche Magnesiumverbindung sowie allenfalls vorhandene weitere Komponenten.

Der Aluminiumsulfatsuspension ist bevorzugt alkali- und/oder chloridfrei.

Unter alkalifrei wird in der Bauchemie üblicherweise eine Zusammensetzung verstanden, welche weniger als 1 Gew.-% Alkali- und/oder Alkalimetallionen berechnet als Natriumoxidäquivalent (Na₂O) aufweist, bezogen auf das Gesamtgewicht der Zusammensetzung bzw. der Aluminiumsulfatsuspension.

Als Na₂O Äquivalent bezeichnet man die Gewichtsmenge, welche sich ergeben würde, wenn sämtliche Alkaliionen (insbesondere Na und K) als Na₂O vorliegen würden.

Chloridfrei bezeichnet in der Bauchemie üblicherweise eine Zusammensetzung, welche weniger als 0.1 Gew.-% Chloridionen aufweist, bezogen auf das Gesamtgewicht der Zusammensetzung bzw. der Aluminiumsulfatsuspension.

Die lösliche Magensiumverbindung wird insbesondere zur Einstellung der Viskosität, insbesondere zur Reduktion der Viskosität verwendet.

Insbesondere wird die lösliche Magnesiumverbindung zur Einstellung der Viskosität, insbesondere zur Reduktion der Viskosität, einer Aluminiumsulfatsuspension verwendet, wobei die Einstellung der Viskosität, insbesondere die Reduktion, bevorzugt im Zeitraum von 1 - 168 h, mehr bevorzugt 1 - 48 h, im Speziellen im Zeitraum von 6 - 24 h, nach Erhalt der mit der löslichen Magnesiumverbindung versetzten Aluminiumsulfatsuspension abgeschlossen ist.

Insbesondere bleibt die einmal eingestellte Viskosität über einen längeren Zeitraum, insbesondere über einen Zeitraum von mehreren Monaten, stabil. Im Speziellen wird die lösliche Magnesiumverbindung daher zur Einstellung der Viskosität, insbesondere zur Reduktion der Viskosität, einer Aluminiumsulfatsuspension über einen Zeitraum von mehreren Monaten, ganz besonders bevorzugt 1 - 3 Monaten, nach Erhalt der mit der löslichen Magnesiumverbindung versetzten Aluminiumsulfatsuspension verwendet. Dies insbesondere bei Aluminiumsulfatsuspensionen mit einem Anteil von > 34 Gew.-% Aluminiumsulfat (Al₂(SO₄)₃).

Da die lösliche Magensiumverbindung eine Einstellung der Viskosität, insbesondere die Reduktion der Viskosität, im Zeitraum von 1 - 168 h, bevorzugt 1 - 48 h, im Speziellen im Zeitraum von 6 - 24 h, nach Erhalt der mit der löslichen Magnesiumverbindung versetzten Aluminiumsulfatsuspension ermöglicht, kann die Viskosität der Aluminiumsulfatsuspension schon kurz nach der Herstellung auf den gewünschten Wert eingestellt werden. Dies erlaubt wiederum eine kürzere Produktionsdauer, da die Aluminiumsulfatsuspensionen nach der Herstellung innerhalb weniger Stunden bestimmungsgemäss eingesetzt werden können, insbesondere als Erstarrung- und/oder Erhärtungsbeschleuniger.

Da die lösliche Magensiumverbindung zudem eine Einstellung der Viskosität, insbesondere die Reduktion der Viskosität, über einen längeren Zeitraum, insbesondere über einen Zeitraum von mehreren Monaten, nach Erhalt der mit der löslichen Magnesiumverbindung versetzten Aluminiumsulfatsuspension ermöglicht, kann eine langfristige Viskositätsreduktion erreicht werden. Damit lassen sich die Aluminiumsulfatsuspensionen bei Bedarf während längerer Zeit mit im Wesentlichen konstanter Viskosität lagern.

Die lösliche Magnesiumverbindung kann demnach eingesetzt werden in einem Verfahren zur Einstellung der Viskosität einer Aluminiumsulfatsuspension. Ein weiterer Aspekt der vorliegenden Erfindung ist demnach ein Verfahren zur Einstellung der Viskosität, insbesondere der Reduktion der Viskosität, einer Aluminiumsulfatsuspension in einem Zeitraum von 1 - 168 h, bevorzugt 1 - 48 h, im Speziellen im Zeitraum von 6 - 24 h, nach Erhalt der mit der löslichen Magnesiumverbindung versetzten Aluminiumsulfatsuspension und/oder zur Einstellung der Viskosität, insbesondere der Reduktion der Viskosität, über einen längeren Zeitraum, insbesondere über einen Zeitraum von mehreren Monaten , umfassend die Schritte:
a) Vorlegen einer wässrigen Zubereitung von Aluminiumsulfat sowie
b) Einmischen einer löslichen Magnesiumverbindung
c) optional einmischen von weiterem Aluminiumsulfat
wobei eine Aluminiumsulfatsuspension erhalten wird.
oder
a) Vorlegen einer wässrigen Zubereitung einer löslichen Magnesiumverbindung sowie
b) Einmischen von Aluminiumsulfat unter Erhalt einer Aluminiumsulfatsuspension.

Eine Zubereitung ist vorliegend eine Lösung oder Suspension. Eine wässrige Zubereitung ist demnach eine Lösung oder Suspension in Wasser.

Die wässrige Zubereitung von Aluminiumsulfat ist eine Lösung oder eine Suspension von Aluminiumsulfat in Wasser. Es ist auch möglich, dass Anteile von Aluminiumsulfat in gelöster Form und Anteile von Aluminiumsulfat in suspendierter Form in der wässrigen Zubereitung vorliegen.

Die erfindungsgemässen Erstarrungs- und/oder Erhärtungsbeschleuniger für hydraulische Bindemittel, im Besonderen für Spritzbeton oder Spritzmörtel sind Aluminiumsulfatsupensionen.

Die lösliche Magnesiumverbindung kann der Aluminiumsulfatzubereitung direkt während deren Herstellung zugegeben werden. Es ist aber auch möglich, die lösliche Magnesiumverbindung der Aluminiumsulfatzubereitung kurz nach deren Herstellung, beispielsweise innerhalb 1h nach deren Herstellung, zuzugeben. Schliesslich ist es auch möglich, die lösliche Magnesiumverbindung der Aluminiumsulfatzubereitung erst nach längerer Zeit nach deren Herstellung zuzugeben, beispielsweise nach 5 Tagen oder länger.

Die lösliche Magnesiumverbindung ist insbesondere eine basische Magnesiumverbindung. Dies meint, dass die lösliche Magnesiumverbindung den pH-Wert von destilliertem Wasser, das mit HCl auf einen pH = 4 eingestellt ist, bei 25°C und einem Druck von 1 bar anzuheben vermag, wenn diese dem sauer eingestellten Wasser zugegeben wird.

Die lösliche Magnesiumverbindung ist bevorzugt eine nichtsilikatische Magnesiumverbindung. Unter einer "nichtsilikatischen Magnesiumverbindung" wird eine Verbindung verstanden, welche Magnesium enthält aber keine Silikatgruppen.

Insbesondere beinhaltet die lösliche Magnesiumverbindung kein Schichtsilikat und/oder kein Phyllosilikat, im Speziellen kein Sepiolith.

Die lösliche Magnesiumverbindung beinhaltet bevorzugt ein Magnesiumsalz und/oder einen Magnesiumkomplex.

Weiter kann es vorteilhaft sein, wenn die lösliche Magnesiumverbindung Calcium und/oder Eisen enthält, bevorzugt Calcium. Calcium kann insbesondere vorteilhaft sein, wenn die Aluminiumsulfatsuspension als Erstarrungs- und/oder Erhärtungsbeschleuniger in mineralischen Bindemitteln auf Basis von speziellen Zementen verwendet wird.

Die erfindungsgemäss verwendeten löslichen Magnesiumverbindungen erlauben es jedoch, hocheffektive Errstarrungs- und/oder Erhärtungsbeschleuniger zu formulieren, welche im Wesentlichen frei von Calcium sind. Da Calcium unter Umständen die Reaktion oder Auflösung von Zementklinker verlangsamt, kann ein Errstarrungs- und/oder Erhärtungsbeschleuniger im Wesentlichen ohne Calcium vorteilhaft sein.

Im Besonderen handelt es sich bei der löslichen Magnesiumverbindung um ein Oxid, Hydroxid, Carbonat, Nitrat, Sulfat, Phosphat, Halogenid, Formiat, Acetat, Citrat oder Mischungen daraus.

Weiter bevorzugt handelt es sich bei der löslichen Magnesiumverbindung um ein Oxid, Hydroxid, Carbonat, Nitrat, Formiat, Acetat, Citrat oder Mischungen daraus.

Bevorzugt ist die lösliche Magnesiumverbindung ein Magnesiumhydroxid, ein Calciummagnesiumhydroxid, ein Magnesiumcarbonat, ein Calciummagnesiumcarbonat, ein Magnesiumcarbonathydroxid, ein Calciummagnesiumcarbonathydroxid, ein Magnesiumoxid und/oder ein Calciummagnesiumoxid. Ganz besonders bevorzugt ist die Magnesiumverbindung ausgewählt aus Magnesiumcarbonat, Magnesiumoxid und/oder Magnesiumhydroxid. Im Speziellen handelt es sich um Magnesiumoxid.

Bevorzugt ist die lösliche Magnesiumverbindung Mg(OH)₂, MgCa(OH)₄, MgCO₃, MgCa(CO₃)₂, 4 MgCO₃ · Mg(OH)₂, MgO und/oder MgCaO₂. Besonders bevorzugt handelt es sich um MgCO₃, Mg(OH)₂ und/oder MgO, im Speziellen MgO.

Diese Magnesiumverbindungen haben sich im vorliegenden Zusammenhang als besonders vorteilhaft erwiesen, da damit eine signifikante Reduktion der Viskosität erreicht werden kann ohne weitere Komponenten negativ zu beeinflussen. Zudem sind die Substanzen gut erhältlich.

Grundsätzlich können aber auch andere lösliche Magnesiumverbindungen eingesetzt werden.

Die Menge der löslichen Magnesiumverbindung wird bevorzugt derart gewählt, dass die Magnesiumatome, bezogen auf das Gesamtgewicht der Aluminiumsulfatsuspension, einen Anteil von 0.02 - 6.3 Gew.-%, insbesondere 0.04 - 4.2 Gew.-%, besonders bevorzugt 0.2 - 2.1 Gew.-%, im Speziellen 0.6 - 1.8 Gew.-%, aufweisen.

Wird als lösliche Magnesiumverbindung Magnesiumoxid eingesetzt, wird dieses, bezogen auf das Gesamtgewicht der Aluminiumsulfatsuspension, bevorzugt in einer Menge von 0.035 - 10.4 Gew.-%, mehr bevorzugt 0.07 - 6.9 Gew.-%, besonders bevorzugt 0.35 - 3.5 Gew.-%, im Speziellen 1 - 3 Gew.-% verwendet.

Mit diesen Mengen wird eine besonders gute Reduktion der Viskosität ermöglicht, ohne dass die erstarrungs- und/oder erhärtungsbeschleunigenden Eigenschaften der Aluminiumsulfatsuspension nennenswert negativ beeinflusst werden.

Bevorzugt weist die Aluminiumsulfatsuspension, bezogen auf das Gesamtgewicht der Aluminiumsulfatsuspension, einen Anteil an Sulfat (SO₄⁻) von 19 - 40 Gew.-%, insbesondere 24 - 36 Gew.-%, im Speziellen 28 - 34 Gew.-%, auf.

Weiter ist es bevorzugt, wenn die Aluminiumsulfatsuspension, bezogen auf das Gesamtgewicht der Aluminiumsulfatsuspension, einen Anteil an Aluminium (Al) von 3.5 - 10 Gew.-%, insbesondere 4.5 - 8.7 Gew.-%, im Besonderen 5.4 - 7 Gew.-%, aufweist.

Mit derartigen Anteilen an Aluminium und Sulfat können Aluminiumsulfatsuspensionen mit einem hohen Wirkstoffanteil hergestellt werden, welche sich durch eine besonders gute Erstarrungs- und/oder Erhärtungsbeschleunigung auszeichnen.

Die Aluminiumsulfatsuspension enthält mit Vorteil Aluminiumsulfat, Aluminiumhydroxysulfat, Schwefelsäure, Aluminiumhydroxid, und/oder Aluminiumhydroxidcarbonat. Besonders bevorzugt ist Aluminiumsulfat.

Das Sulfat der Aluminiumsulfatsuspension stammt insbesondere aus Aluminiumsulfat, Aluminiumhydroxysulfat und/oder Schwefelsäure. Besonders bevorzugt ist Aluminiumsulfat. Mit anderen Worten enthält der Beschleuniger insbesondere wenigstens eine der genannten Substanzen als Quelle für Sulfat.

Das Aluminium des Beschleunigers stammt vorteilhafterweise aus Aluminiumsulfat, Aluminiumhydroxysulfat, Aluminiumhydroxid, und/oder Aluminiumhydroxidcarbonat. Besonders bevorzugt ist Aluminiumsulfat. Anders ausgedrückt enthält der Beschleuniger insbesondere wenigstens eine der genannten Substanzen als Quelle für Aluminium.

In einer vorteilhaften Ausführungsform enthält die Aluminiumsulfatsuspension, bezogen auf das Gesamtgewicht der Aluminiumsulfatsuspension, 22 - 46 Gew.-%, insbesondere 28 - 43 Gew.-%, bevorzugt 34 - 41 Gew.-%, Aluminiumsulfat (Al₂(SO₄)₃).

Das zur Herstellung verwendbare Aluminiumsulfat kann insbesondere unterschiedliche Mengen an Kristallwasser enthalten. Das typischerweise verwendete Aluminiumsulfat ist das Aluminiumsulfat-Tetradecahydrat (Al₂(SO₄)₃ · 14.3 H₂O). Es wird üblicherweise auch als 17% Aluminiumsulfat bezeichnet, weil es 17% Al₂O₃ enthält.

Die in dieser vorliegenden Schrift erwähnten Mengenangaben betreffend Aluminiumsulfat beziehen sich jeweils auf Al₂(SO₄)₃ ohne Kristallwasser. Die Mengenabgaben bezüglich der unterschiedlichen Referenzverbindungen lassen sich unter Berücksichtigung der folgenden Zusammenhänge einfach umrechnen: Al₂(SO₄)₃ · 14.3 H₂O enthält 57 Gew.-% Al₂(SO₄)₃ oder 17 Gew.-% Al₂O₃.

Das Aluminiumsulfat kann auch durch eine Reaktion von Aluminiumhydroxid und/oder Aluminiummetall mit Schwefelsäure bei der Herstellung der Aluminiumsulfatsuspension erzeugt werden, wobei sich entsprechend Sulfationen in der wässrigen Lösung bilden. Allgemein kann Aluminiumsulfat durch eine Reaktion einer basischen Aluminiumverbindung und/oder Aluminiummetall mit Schwefelsäure erzeugt werden.

Gemäss einer weiteren vorteilhaften Ausführungsform enthält die Aluminiumsulfatsuspension, bezogen auf das Gesamtgewicht der Aluminiumsulfatsuspension, 0.01 - 15 Gew.-%, insbesondere 0.05 - 5 Gew.-%, besonders bevorzugt 0.1 - 2 Gew.-%, Aluminiumhydroxid.

Damit lässt sich z.B. der Aluminiumgehalt unabhängig vom Sulfatgehalt der Aluminiumsulfatsuspension in effektiver Weise erhöhen.

Das Aluminiumhydroxid kann in amorpher und/oder kristalliner Form eingesetzt werden. Vorteilhafterweise wird amorphes Aluminiumhydroxid verwendet. Dies insbesondere da kristallines Aluminiumhydroxid typischerweise erst bei Temperaturen > 130 °C und einem Druck > 1 bar ausreichend reagiert. Das Alumiumhydroxid kann auch in Form von Aluminiumhydroxidcarbonat, Aluminiumhydroxysulfat oder ähnlichem verwendet werden.

In einer vorteilhaften Ausführungsform liegt das Molverhältnis von Aluminium zu Sulfat der Aluminiumsulfatsuspension < 0.7, insbesondere bei 2:3. In diesem Fall kann die Aluminiumsulfatsuspension in besonders einfacher Art und Weise durch das Suspendieren von Aluminiumsulfat (Al₂(SO₄)₃) hergestellt werden. Bei der erfindungsgemässen Verwendung der löslichen Magnesiumverbindung lassen sich so Aluminiumsulfatsuspensionen mit hohen Wirkstoffgehalten und geringen Viskositäten herstellen.

In einer weiteren vorteilhaften Ausführungsform liegt das Molverhältnis von Aluminium zu Sulfat der Aluminiumsulfatsuspension im Bereich von 0.5 - 2, bevorzugt 0.67 - 1.35, im Besonderen 0.7 - 1.0. Solche Aluminiumsulfatsuspensionen weisen für gewisse Anwendungen eine verbesserte Wirksamkeit auf.

Bevorzugt weist die Aluminiumsulfatsuspension, bezogen auf das Gesamtgewicht der Aluminiumsulfatsuspension, einen Anteil an Wasser von 30 - 80 Gew.-%, insbesondere 40 - 70 Gew.-%, bevorzugt 50 - 65 Gew.-%. Kristallwasser der Komponenten der Aluminiumsulfatsuspension, z.B. Kristallwasser aus Aluminiumsulfat, wird hier mitgerechnet.

Gemäss einer weiteren vorteilhaften Ausführungsform wird die lösliche Magnesiumverbindung zur Reduktion der Viskosität in Kombination mit einer Calciumverbindung und/oder einer Eisenverbindung eingesetzt. Besonders wird sowohl eine Calciumverbindung als auch eine Eisenverbindung verwendet. Ohne an die Theorie gebunden zu sein, wird davon ausgegangen, dass die Calciumverbindung und die Eisenverbindung die Wirkung der löslichen Magnesiumverbindung zusätzlich verstärken.

Die Calciumverbindung und/oder die Eisenverbindung ist im Besonderen ein Oxid, Hydroxid, Carbonat, Nitrat, Sulfat, Phosphat, Halogenid, Formiat, Acetat und/oder Citrat.

Die Calciumverbindung und/oder die Eisenverbindung ist bevorzugt ein Oxid, Hydroxid, Carbonat, Nitrat, Formiat, Acetat und/oder Citrat.

Besonders bevorzugt ist die Calciumverbindung ein Calciumcarbonat, ein Calciumoxid und/oder ein Calciumhydroxid. Besonders bevorzugt ist Calciumoxid. Im Speziellen handelt es sich bei der Calciumverbindung um Ca(OH)₂, CaCO₃ und/oder CaO. Besonders bevorzugt ist CaO.

Eine Menge der Calciumverbindung wird im Besonderen derart gewählt, dass die Calciumatome, bezogen auf das Gesamtgewicht der Aluminiumsulfatsuspension, einen Anteil von 0.001 - 4 Gew.-%, bevorzugt 0.01 - 2 Gew.-%, insbesondere 0.07 - 1.4 Gew.-%, im Speziellen 0.1 - 0.7 Gew.-%, aufweisen.

Wird als Calciumverbindung CaO eingesetzt, beträgt ein Anteil an CaO, bezogen auf das Gesamtgewicht der Aluminiumsulfatsuspension, mit Vorteil 0.001 - 5 Gew.-%, bevorzugt 0.01 - 3 Gew.-%, insbesondere 0.1 - 2 Gew.-%, im Speziellen 0.2 - 1 Gew.-%.

Besonders bevorzugt ist die Eisenverbindung ein Eisenoxid. Im Speziellen handelt es sich bei der Eisenverbindung um Fe₂O₃.

Eine Menge der Eisenverbindung wird im Besonderen derart gewählt, dass die Eisenatome, bezogen auf das Gesamtgewicht der Aluminiumsulfatsuspension, einen Anteil von 0.001 - 10 Gew.-%, insbesondere 0.1 - 5 Gew.-%, im Speziellen 0.2 - 2 Gew.-%, ganz besonders bevorzugt 0.1 - 0.6 Gew.-%, aufweisen.

Wird als Eisenverbindung Fe₂O₃ eingesetzt, beträgt ein Anteil an Fe₂O₃, bezogen auf das Gesamtgewicht der Aluminiumsulfatsuspension, mit Vorteil 0.001 - 14.3 Gew.-%, insbesondere 0.1 - 7.1 Gew.-%, im Speziellen 0.2 - 2 Gew.-%.

Gemäss einer weiteren vorteilhaften Ausführungsform enthält die Aluminiumsulfatsuspension Kieselsäure.

Unter dem Begriff "Kieselsäure" wird in der vorliegenden Schrift eine Kieselsäure verstanden, zu der neben der ortho-Kieselsäure alle Formen des Siliciumdioxids, also das Anhydrid der ortho-Kieselsäure, das eigentliche Siliciumdioxid, wie auch kolloidale, gefällte oder pyrogene Kieselsäure oder Silicafume, gezählt werden. Bevorzugt handelt es sich bei der Kieselsäure um Siliziumdioxid oder SiO₂.

Die Kieselsäure liegt bevorzugt in einer derartigen Menge vor, dass der Gehalt an Siliziumdioxid, bezogen auf das Gesamtgewicht der Aluminiumsulfatsuspension, 0.001 bis 5 Gew.-%, bevorzugt 0.1 bis 2 Gew.-%, noch mehr bevorzugt 0.2 bis 1 Gew.-% beträgt.

Im Besonderen beinhaltet die Aluminiumsulfatsuspension ein Alkalialuminat und/oder ein Erdalkalialuminat. Bevorzugt handelt es sich um ein Lithiumaluminat, Natriumaluminat, Kaliumaluminat und/oder ein Calciumaluminat.

Alkalialuminat kann als Pulver eingesetzt werden, bevorzugt sind jedoch wässrige Lösungen von Alkalialuminat.
Beispielsweise handelt es sich um NaAlO₂, CaAl₂O₄, Ca₃Al₂O₆, Ca₄Al₂Fe_{0.33}Si_{0.25}O₈.

Eine Menge des Alkalialuminats und/oder des Erdalkalialuminats, insbesondere des Lithiumaluminats, Natriumaluminats, Kaliumaluminats und/oder des Calciumaluminats, beträgt bevorzugt total 0.001 - 20 Gew.-%, insbesondere 0.1 - 8 Gew.-%, im Speziellen 0.2 - 4 Gew.-%, ganz besonders bevorzugt 0.5 - 2 Gew.-%, jeweils bezogen auf das Gesamtgewicht der Aluminiumsulfatsuspension. Mit anderen Worten stehen die Gewichtangaben für die Gesamtmenge an Lithiumaluminat, Natriumaluminat, Kaliumaluminat und Calciumaluminat zusammen.

Zusätzlich kann zur Herstellung der Aluminiumsulfatsuspension mindestens ein weiteres zwei- oder höherwertiges Metallsulfat verwendet werden, vorzugsweise in einer Menge von 0.1 - 5 Gew.-%, bezogen auf das Gesamtgewicht der Aluminiumsulfatsuspension. Besonders bevorzugt als weiteres Metallsulfat ist das Mangan(II)sulfat. Ebenfalls geeignet ist das Eisensulfat.

Weiter kann es vorteilhaft sein, wenn die Aluminiumsulfatsuspension zudem 0.1 - 15 Gew.-%, bevorzugt 0.1 - 5 Gew.-%, im Speziellen 0.2 - 2 Gew.-%, bezogen auf das Gesamtgewicht der Aluminiumsulfatsuspension, an Alkanolamin enthält. Als Alkanolamin wird vorteilhafterweise Monoethanolamin, Diethanolamin, Triethanolamin und/oder Methyl-diisopropanolamin verwendet.

Die Aluminiumsulfatsuspension kann zusätzlich ein Fliessmittel, insbesondere ein Polycarboxylat, und/oder Stabilisatoren, z.B. Bentonite, Palygorskite (z.B. Actigel 208), Kaolin und/oder Magnesiumsilikate, z.B. Sepiolith, enthalten.

Die Aluminiumsulfatsuspension kann insbesondere ein Magnesiumsilikat, insbesondere ein Schichtsilikat und/oder Phyllosilikat, beispielsweise Sepiolith und/oder Bentonit enthalten. Falls vorhanden beträgt ein Anteil an Magnesiumsilikat mit Vorteil 0.001 - 5 Gew.-%, bevorzugt 0.1 - 2 Gew.-%, im Speziellen 0.2 - 1 Gew.-%, bezogen auf das Gesamtgewicht der Aluminiumsulfatsuspension. Magnesiumsilikate sind im vorliegenden Zusammenhang inert bzw. gemäss der vorstehenden Löslichkeitsdefinition unlöslich und tragen zur Phasenstabilisierung bei.

Weiter kann die lösliche Magnesiumverbindung in Kombination mit einem Magnesiumsilikat zur Einstellung, insbesondere zur Reduktion, der Viskosität und zur gleichzeitigen Stabilisierung der Aluminiumsulfatsuspension verwendet werden. Das Magnesiumsilikat ist insbesondere ein Schichtsilikat und/oder Phyllosilikat, beispielsweise Sepiolith und/oder Bentonit. Besonders bevorzugt handelt es sich um Sepiolith. Das Magnesiumsilikat, insbesondere Sepiolith, wird dabei bevorzugt mit einem Anteil von 0.001 - 5 Gew.-%, bevorzugt 0.1 - 2 Gew.-%, im Speziellen 0.2 - 1 Gew.-%, bezogen auf das Gesamtgewicht der Aluminiumsulfatsuspension verwendet. Die lösliche Magnesiumverbindung ist bevorzugt ausgewählt aus Magnesiumcarbonat, Magnesiumoxid und/oder Magnesiumhydroxid. Im Speziellen handelt es sich um Magnesiumoxid. Die Menge der löslichen Magnesiumverbindung wird bevorzugt derart gewählt, dass die Magnesiumatome, bezogen auf das Gesamtgewicht der Aluminiumsulfatsuspension, einen Anteil von 0.02 - 6.3 Gew.-%, insbesondere 0.04 - 4.2 Gew.-%, besonders bevorzugt 0.2 - 2.1 Gew.-%, im Speziellen 0.6 - 1.8 Gew.-%, aufweisen.

Selbstverständlich kann die Aluminiumsulfatsuspension weitere Bestandteile umfassen. Dabei kann es sich insbesondere um Fluorverbindungen, wie z.B. Flusssäure, Alkalifluoride, und/oder Fluorokomplexe handeln. Diese ermöglichen es beispielsweise, die beschleunigende Wirkung nochmals zu verstärken.

Im Besonderen enthält die Aluminiumsulfatsuspension bezogen auf das Gesamtgewicht der Aluminiumsulfatsuspension 0.01 - 10 Gew.-%, insbesondere 0.1 - 2 Gew.-%, bevorzugt 0.2 - 0.5 Gew.-%, Fluorid. Damit kann die Beschleunigungswirkung der Aluminiumsulfatsuspension gegebenenfalls verstärkt werden.

Die vorgenannten Stoffe sind dabei insbesondere zumindest teilweise als Ionen in Lösung anzutreffen. Sie können aber beispielsweise auch in komplexierter Form oder ungelöst in der Aluminiumsulfatsuspension auftreten.

Eine besonders vorteilhafte Aluminiumsulfatsuspension umfasst beispielsweise folgende Komponenten oder sie besteht daraus (in Gew.-%, jeweils bezogen auf das Gesamtgewicht der Aluminiumsulfatsuspension):
a) 19 bis 40 Gew.-%, insbesondere 24 - 36 Gew.-%, im Speziellen 28 - 34 Gew.-%, Sulfat;
b) 3.5 - 10 Gew.-%, insbesondere 4.5 - 8.7 Gew.-%, im Besonderen 5.4 - 7 Gew.-%, Aluminium;
c) 0.02 - 6.3 Gew.-%, insbesondere 0.04 - 4.2 Gew.-%, besonders bevorzugt 0.2 - 2.1 Gew.-%, im Speziellen 0.6 - 1.8 Gew.-%, Magnesium;
d) optional, 0.001 - 4 Gew.-%, bevorzugt 0.01 - 2 Gew.-%, insbesondere 0.07 - 1.4 Gew.-%, im Speziellen 0.1 - 0.7 Gew.-%, Calcium;
e) optional 0.001 - 10 Gew.-%, insbesondere 0.1 - 5 Gew.-%, im Speziellen 0.2 - 2 Gew.-%, ganz besonders bevorzugt 0.1 - 0.6 Gew.-%, Eisen;
f) optional, 0.001 bis 5 Gew.-%, bevorzugt 0.1 bis 2 Gew.-%, noch mehr bevorzugt 0.2 bis 1 Gew.-%, Siliziumdioxid oder SiO₂;
g) 30 - 80 Gew.-%, insbesondere 40 - 70 Gew.-%, bevorzugt 50 - 65 Gew.-%, Wasser.

Eine besonders bevorzugte Aluminiumsulfatsuspension enthält beispielsweise (in Gew.-%, jeweils bezogen auf das Gesamtgewicht der Aluminiumsulfatsuspension):
a) 22 - 46 Gew.-%, insbesondere 28 - 43 Gew.-%, bevorzugt 34 - 41 Gew.-%, Aluminiumsulfat (Al₂(SO₄)₃;
b) optional, 0.01 - 15 Gew.-%, insbesondere 0.05 - 5 Gew.-%, besonders bevorzugt 0.1 - 2 Gew.-%, Aluminiumhydroxid (Al(OH)₃);
c) 0.035 - 10.4 Gew.-%, bevorzugt 0.07 - 6.9 Gew.-%, besonders bevorzugt 0.5 - 3.5 Gew.-%, im Speziellen 1 - 3 Gew.-%, Magnesiumoxid;
d) optional, 0.001 - 5 Gew.-%, insbesondere 0.1 - 2 Gew.-%, im Speziellen 0.2 - 1 Gew.-%, Calciumoxid;
e) optional, 0.001 - 10 Gew.-%, insbesondere 0.1 - 5 Gew.-%, im Speziellen 0.2 - 2 Gew.-%, ganz besonders bevorzugt 0.1 - 0.6 Gew.-% Eisen ;
f) optional, 0.001 bis 5 Gew.-%, bevorzugt 0.1 bis 2 Gew.-%, noch mehr bevorzugt 0.2 bis 1 Gew.-%, Siliziumdioxid;
g) optional, 0.001 - 20 Gew.-%, insbesondere 0.1 - 8 Gew.-%, im Speziellen 0.2 - 4 Gew.-%, ganz besonders bevorzugt 0.5 - 2 Gew.-%, eines Alkalialuminats und/oder eines Erdalkalialuminats, insbesondere Natriumaluminat, Kaliumaluminat und/oder Calciumaluminat;
h) optional, 0.1 - 15 Gew.-%, bevorzugt 0.1 - 5 Gew.-%, im Speziellen 0.2 - 2 Gew.-%, Alkanolamin;
i) optional 0.01 - 10 Gew.%, insbesondere 0.1 - 2 Gew.-%, bevorzugt 0.2 - 0.5 Gew.% Fluorid;
j) 30 - 80 Gew.-%, insbesondere 40 - 70 Gew.-%, bevorzugt 50 - 65 Gew.-%, Wasser.

Dabei werden in einer bevorzugten Ausführungsform jeweils die bevorzugtesten Bereiche und Subtanzen gewählt.

Gemäss einer speziell bevorzugten Ausführungsform enthält die Aluminiumsulfatsuspension folgende Komponenten oder sie besteht daraus (in Gew.-%, jeweils bezogen auf das Gesamtgewicht der Aluminiumsulfatsuspension):
a) 34 - 41 Gew.-%, Aluminiumsulfat (Al₂(SO₄)₃;
b) 1 - 3 Gew.-% Magnesiumoxid;
c) 0.2 - 1 Gew.-%, Calciumoxid;
d) optional, 0.001 - 14.3 Gew.-%, insbesondere 0.1 - 7.1 Gew.-%, im Speziellen 0.2 - 2 Gew.-%, Eisenoxid;
e) optional, 0.001 bis 5 Gew.-%, bevorzugt 0.1 bis 2 Gew.-%, noch mehr bevorzugt 0.2 bis 1 Gew.-%, Siliziumdioxid;
f) optional, 0.001 - 20 Gew.-%, insbesondere 0.1 - 8 Gew.-%, im Speziellen 0.2 - 4 Gew.-%, ganz besonders bevorzugt 0.5 - 2 Gew.-%, eines Alkalialuminats und/oder eines Erdalkalialuminats, insbesondere Natriumaluminat, Kaliumaluminat und/oder Calciumaluminat;
g) 50 - 65 Gew.-% Wasser.

Gemäss einer weiteren speziell bevorzugten Ausführungsform enthält die Aluminiumsulfatsuspension folgende Komponenten oder sie besteht daraus (in Gew.-%, jeweils bezogen auf das Gesamtgewicht der Aluminiumsulfatsuspension):
a) 34 - 41 Gew.-%, Aluminiumsulfat (Al₂(SO₄)₃;
b) 1 - 3 Gew.-% Magnesiumoxid;
c) 0.8 - 6 Gew.-%, ganz besonders bevorzugt 0.5 - 2 Gew.-%, eines Alkalialuminats und/oder eines Erdalkalialuminats, insbesondere Natriumaluminat, Kaliumaluminat und/oder Calciumaluminat;
d) optional, 0.001 - 5 Gew.-%, insbesondere 0.1 - 2 Gew.-%, im Speziellen 0.2 - 1 Gew.-%, Calciumoxid;
e) optional, 0.001 - 5 Gew.-%, insbesondere 0.1 - 2 Gew.-%, im Speziellen 0.2 - 1 Gew.-%, Eisenoxid;
f) optional, 0.001 bis 5 Gew.-%, bevorzugt 0.1 bis 2 Gew.-%, noch mehr bevorzugt 0.2 bis 1 Gew.-%, Siliziumdioxid;
g) 50 - 65 Gew.-% Wasser.

Ein weiterer Aspekt der vorliegenden Erfindung betrifft ein Verfahren zur Herstellung einer wie vorstehend beschriebenen Aluminiumsulfatsuspension, welche insbesondere als Abbinde- und/oder Erhärtungsbeschleuniger ausgelegt ist. Dabei werden die vorstehend genannten Komponenten oder Substanzen insbesondere zu einer wässrigen Suspension vermischt. Die Zugabe der einzelnen Substanzen kann prinzipiell in beliebiger Reihenfolge geschehen. Die erfindungsgemässen Aluminiumsulfatsuspensionen sind entsprechend erhältlich durch derartige Verfahren.

Die erfindungsgemäss erhältlichen Aluminiumsulfatsuspensionen können als Erstarrungs- und/oder Erhärtungsbeschleuniger zur Beschleunigung des Abbindens und/oder Erhärtens von mineralischen Bindemitteln und/oder mineralischen Bindemittelzusammensetzungen eingesetzt werden. Dabei handelt es sich insbesondere um eine Mörtel- und/oder Betonzusammensetzung, insbesondere um einen Spritzmörtel und/oder einen Spritzbeton.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein. Eine "mineralische Bindemittelzusammensetzung" ist entsprechend eine Zusammensetzung enthaltend mindestens ein mineralisches Bindemittel.

Beispiele für mineralische Bindemittel, deren Erhärten und/oder Abbinden durch die erfindungsgemässe Aluminiumsulfatsuspensionen beschleunigt werden können, sind Zemente, wie beispielsweise Portlandzement, Mischzemente, Tonerdezemente, Calciumsulphoaluminatzemente, sowie Kalk, hydraulischer Kalk und Gips oder Mischungen aus zwei oder mehreren der genannten mineralischen Bindemittel.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von > 35 Gew.-%, Insbesondere ist der Zement vom Typ CEM I, II, III, IV oder V (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel wenigstens 95 Gew.-% aus hydraulischem Bindemittel, insbesondere aus Zementklinker.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe, wie z.B. Kalksteinmehl, Quarzmehl und/oder Pigmente enthalten.

In einer vorteilhaften Ausführungsform enthält das mineralische Bindemittel 5 - 95 Gew.-%, insbesondere 5 - 65 Gew.-%, im Speziellen 15 - 35 Gew.-%, latenthydraulische und/oder puzzolanische Bindemittel.

Weiter betrifft die vorliegende Erfindung ein Verfahren zur Beschleunigung des Erstarrens und/oder Erhärtens von mineralischen Bindemitteln oder mineralischen Bindemittelzusammensetzungen, beispielsweise Mörtel oder Beton, wobei einem mineralischen Bindemittel oder einer mineralischen Bindemittelzusammensetzungen eine wie vorstehend beschriebene Aluminiumsulfatsuspension als Erstarrungsund/oder Erhärtungsbeschleuniger in einer Menge von 0.1 bis 15 Gew.-%, insbesondere von 1 bis 10 Gew.-%, besonders bevorzugt 4 - 8 Gew.-%, bezogen auf das Gewicht des mineralischen Bindemittels, zugegeben wird.

Beispielsweise ist es möglich, die Aluminiumsulfatsuspension einer Beton- oder Mörtelzusammensetzung, insbesondere einem Spritzbeton oder einem Spritzmörtel, zugegeben, wobei die Beton- oder Mörtelzusammensetzung zur Beschichtung eines Substrats eingesetzt wird. Das Substrat ist insbesondere eine Oberfläche eines Tunnels, einer Mine, einer Baugrube, einer Bucht, eines Brunnes und/oder eines Abflusses.

Bevorzugt wird die Aluminiumsulfatsuspension einem Spritzmörtel oder Spritzbeton nach dem Trocken- oder Nass-Spritzverfahren zudosiert, wobei die Aluminiumsulfatsuspension dem trockenen oder mit Wasser angemachten Bindemittel, Spritzmörtel oder Spritzbeton in der Förderleitung, der Vorbenetzungsdüse oder der Spritzdüse, zugegeben wird.

Auch möglich ist es, die Aluminiumsulfatsuspension einer Beton- oder Mörtelzusammensetzung, insbesondere einem Spritzbeton oder einem Spritzmörtel, zugegeben, wobei die Beton- oder Mörtelzusammensetzung zur Herstellung von Freiformstrukturen eingesetzt wird.

Weiterhin ist es möglich, die Aluminiumsulfatsuspension einer Beton- oder Mörtelzusammensetzung in einem Verfahren der additiven Fertigung zuzumischen, vorzugsweise mittels eines dynamischen Mischers.

Aus den nachfolgenden Ausführungsbeispielen ergeben sich dem Fachmann weitere Abwandlungen und Vorteile der Erfindung.

### Ausführungsbeispiele

### 1. Herstellung von Aluminiumsulfatsuspensionen

Es wurde eine vorgegebene Menge an Wasser in einem Becherglas vorgelegt. Unter Rühren (mechanischer Propellerrührer mit 850 Umdrehungen) wurde sodann das jeweilige Pulvergemisch (Al₂(SO₄)₃ · 14.3 H₂O; MgO, MgCaO₂, Sepiolith) mit den Anteilen gemäss Tabelle 1 portionenweise zugegeben und die Suspension auf 50°C aufgeheizt und bei dieser Temperatur für 1 h gerührt (die Anteile von NaAlO₂ beziehen sich auf das Natriumaluminat als solches, ohne das Wasser der Lösung. Letzteres ist unter H₂O eingerechnet). Anschliessend wurde die Heizung ausgeschaltet und für 6 h nachgerührt.

**Tabelle 1: Hergestellte Aluminiumsulfatsupensionen**

| **Beispiel →** | **1** | **2** | **3** |
|---|---|---|---|
| **Substanz ↓** | | | |
| **H₂O** [Gew.-%] | 28.8 | 28.3 | 27.3 |
| **Al₂(SO₄)₃ · 14.3 H₂O** [Gew.-%] | 68 | 68 | 68 |
| **MgO** [Gew.-%] | 2.5 | 2 | - |
| **MgCaO₂** [Gew.-%] | - | 1 | 4 |
| **Sepiolith¹** [Gew.-%] | 0.7 | 0.7 | 0.7 |

| | | | |
|---|---|---|---|
| ¹ Pangel S9 von Tolsa Group | | | |

Die so hergestellten Aluminiumsulfatsupensionen haben sich über mehrere Monate als lagerstabil erwiesen und verfügen über eine für praktische Anwendungen als Spritzbetonbeschleuniger geeignete Viskosität im Bereich von < 2'000 mPa·s. Die Messung der Viskosität erfolgte gemäss Norm DIN EN ISO 2431:2011 mit einem ISO-Becher Nr. 6 bei einer Temperatur von 23°C.

### 2. Effekt des Anteils der löslichen Magnesiumverbindung

In einem zweiten Satz an Experimenten wurde der Effekt des Anteils der löslichen Magnesiumverbindung untersucht. Hierfür wurden eine Aluminiumsulfatsuspension mit einem Anteil an Al₂(SO₄)₃ · 14.3 H₂O von 62 Gew.-% und unterschiedlichen Mengen an MgO (0 - 5 Gew.-%) analog zum in Kapitel 1 beschriebenen Verfahren hergestellt, wobei die Proben aber jeweils auf 60°C aufgeheizt und mit 650 Umdrehungen pro Minute gerührt wurden.

Die Viskositäten wurden mit dem gleichen Verfahren wie in Kapitel 1 beschrieben nach 6 h und nach 24 h Stunden gemessen. Tabelle 2 gibt eine Übersicht über die Resultate.

**Tabelle 2: Abhängigkeit der Viskosität vom Anteil der löslichen Magnesiumverbindung**

| | **Anteil MgO** [Gew.-%] | | | | | |
|---|---|---|---|---|---|---|
| | 0 | 1 | 2 | 3 | 4 | 5 |
| **Viskosität nach 6 h** [mPa·s] | 495 | 515 | 490 | 141 | 150 | 90 |
| **Viskosität nach 24 h** [mPa·s] | 500 | 805 | 403 | 155 | 190 | 111 |

Wie aus Tabelle 2 ersichtlich ist, kann die Viskosität der Aluminiumsulfatsuspension durch die Zugabe von 2 und mehr Gew.-% MgO bei hohem Gehalt an Aluminiumsulfat signifikant reduziert werden. Entsprechend lässt sich mit einer löslichen Magnesiumverbindung die Viskosität einer Aluminiumsulfatsuspension nach 6 - 24 Stunden gezielt einstellen.

In einem dritten Satz an Experimenten wurde anstelle von Magnesiumoxid Magnesiumhydroxid als viskositätsreduzierende Verbindung in einer Aluminiumsulfatsuspension mit zusätzlichem Aluminimhydroxid getestet.

Hierfür wurden wässrige Aluminiumsulfatsuspensionen mit 63 Gew.-% Al₂(SO₄)₃ · 14.3 H₂O, 0.6 Gew.-% Al(OH)₃ (amorph, enthaltend 75 Gew.-% Al(OH)₃ mit 25 Gew.-% Kristallwasser), und als Rest Wasser unterschiedlichen Mengen an Mg(OH)₂ (0 - 5 Gew.-%; siehe Tabelle 3) analog zum in Kapitel 1 beschriebenen Verfahren zugegeben. Die Proben wurden aber jeweils auf 40°C aufgeheizt und mit 850 Umdrehungen pro Minute gerührt.

Die Viskositäten wurden mit dem gleichen Verfahren wie in Kapitel 1 beschrieben nach 6 h, 24 h und 48 h Stunden gemessen. Tabelle 3 gibt eine Übersicht über die Resultate.

**Tabelle 3: Abhängigkeit der Viskosität vom Anteil der löslichen Magnesiumverbindung**

| | **Anteil Mg(OH)₂** [Gew.-%] | | | | | |
|---|---|---|---|---|---|---|
| | 0 | 1 | 2 | 3 | 4 | 5 |
| **Viskosität nach 6 h** [mPa·s] | 536 | 752 | 745 | 497 | 462 | - |
| **Viskosität nach 24 h** [mPa·s] | 387 | 420 | 273 | 166 | 225 | 275 |
| **Viskosität nach 48 h** [mPa·s] | 260 | 272 | 289 | 160 | 130 | 208 |

Wie aus Tabelle 3 ersichtlich ist, kann auch die Viskosität der Aluminiumsulfatsuspensionen mit Aluminiumhydroxid durch die Zugabe von 2 und mehr Gew.-% Mg(OH)₂ bei hohem Gehalt an Aluminiumsulfat signifikant reduziert werden. Entsprechend lässt sich auch mit Mg(OH)₂ als lösliche Magnesiumverbindung die Viskosität einer Aluminiumsulfatsuspension nach 6 - 48 Stunden und im Besonderen nach 24 - 48 h, gezielt einstellen.

Zudem hat sich gezeigt, dass sich die Viskositäten der so hergestellten Aluminiumsulfatsuspension während 3 Monaten aufrechterhalten lassen, ohne dass sich diese signifikant ändern.

Die vorstehend beschriebenen Aluminiumsulfatsuspensionen haben sich als geeignete Beschleuniger für Spritzbeton und Spritzmörtel herausgestellt.

### 3. Effekt von Magnesiumsilikaten (Vergleichsversuche)

Zu Vergleichszwecken wurde der Effekt von Sepiolith (Magnesiumsilikat) auf die Viskosität einer Aluminiumsulfatsuspension untersucht. Hierfür wurden eine Aluminiumsulfatsuspension mit einem Anteil an Al₂(SO₄)₃ · 14.3 H₂O von 62 Gew.-% und unterschiedlichen Mengen an Sepiolith (0 - 5 Gew.-%) analog zum in Kapitel 1 beschriebenen Verfahren hergestellt, wobei die Proben aber jeweils auf 60°C aufgeheizt und mit 650 Umdrehungen pro Minute gerührt wurden.

Die Viskositäten wurden mit dem gleichen Verfahren wie in Kapitel 1 beschrieben nach 6 h, 24 h und 48 h Stunden gemessen. Tabelle 4 gibt eine Übersicht über die Resultate.

**Tabelle 4: Abhängigkeit der Viskosität vom Anteil der löslichen Magnesiumverbindung**

| | **Anteil Sepiolith¹** [Gew.-%] | |
|---|---|---|
| | 0 | 1 |
| **Viskosität nach 6 h** [mPa·s] | 452 | 1'186 |
| **Viskosität nach 24 h** [mPa·s] | 518 | 1'275 |
| **Viskosität nach 48 h** [mPa·s] | 396 | 1'066 |

| | | |
|---|---|---|
| ¹ Pangel S9 von Tolsa Group | | |

Bei über 1 Gew.-% Sepiolith war die Viskosität derart hoch, dass sie mit der vorstehend genannten Methode nicht mehr messbar war.

Aufgrund der Ergebnisse wird deutlich, dass sich mit Sepiolith die Viskosität einer Aluminiumsulfatsuspension im Gegensatz zu den löslichen Magnesiumverbindungen im Zeitraum bis 48 Stunden nach der Herstellung nicht reduzieren lässt. Im Gegenteil, die Viskosität der Aluminiumsulfatsuspension wird aufgrund der Zugabe stark erhöht.

Obgleich die vorstehend beschriebenen Ausführungsformen der Erfindung bevorzugt sind, ist es selbstverständlich, dass die Erfindung nicht auf diese Ausführungsformen beschränkt ist und im Umfang der Offenbarung beliebig abgewandelt werden kann.

## Patentansprüche

1. Verwendung einer löslichen Magnesiumverbindung zur Einstellung, insbesondere zur Reduktion, der Viskosität einer Aluminiumsulfatsuspension.

2. Verwendung nach Anspruch 1, wobei die Aluminiumsulfatsuspension ein Erstarrungs- und/oder Erhärtungsbeschleuniger für ein mineralisches Bindemittel, insbesondere einen Spritzbetonbeschleuniger, ist.

3. Verwendung nach wenigstens einem der vorangehenden Ansprüche, wobei die Magnesiumverbindung ein Oxid, Hydroxid, Carbonat, Nitrat, Sulfat, Phosphat, Halogenid, Formiat, Citrat und/oder Acetat ist.

4. Verwendung nach wenigstens einem der vorangehenden Ansprüche, wobei die Magnesiumverbindung ausgewählt ist aus Magnesiumcarbonat, Magnesiumoxid und/oder Magnesiumhydroxid.

5. Verwendung nach wenigstens einem der vorangehenden Ansprüche, wobei eine Menge der Magnesiumverbindung derart gewählt wird, dass die Magnesiumatome, bezogen auf das Gesamtgewicht der Aluminiumsulfatsuspension, einen Anteil von 0.02 - 6.3 Gew.-%, insbesondere 0.04 - 4.2 Gew.-%, besonders bevorzugt 0.2 - 2.1 Gew.-%, im Speziellen 0.6 - 1.8 Gew.-%, aufweisen.

6. Verwendung nach wenigstens einem der vorangehenden Ansprüche, wobei die Aluminiumsulfatsuspension, bezogen auf das Gesamtgewicht der Aluminiumsulfatsuspension, einen Anteil an Sulfat (SO₄⁻) von 19 - 40 Gew.-%, insbesondere 24 - 36 Gew.-%, im Speziellen 28 - 34 Gew.-%, aufweist und wobei die Aluminiumsulfatsuspension, bezogen auf das Gesamtgewicht der Aluminiumsulfatsuspension, einen Anteil an Aluminium (Al) von 3.5 - 10 Gew.-%, insbesondere 4.5 - 8.7 Gew.-%, im Besonderen 5.4 - 7 Gew.-%, aufweist.

7. Verwendung nach wenigstens einem der vorangehenden Ansprüche, wobei die Aluminiumsulfatsuspension, bezogen auf das Gesamtgewicht der Aluminiumsulfatsuspension, 22 - 46 Gew.-%, insbesondere 28 - 43 Gew.-%, bevorzugt 34 - 41 Gew.-%, Aluminiumsulfat (Al₂(SO₄)₃) enthält.

8. Verwendung nach wenigstens einem der vorangehenden Ansprüche, wobei die Aluminiumsulfatsuspension, bezogen auf das Gesamtgewicht der Aluminiumsulfatsuspension, 0.01 - 15 Gew.-% Aluminiumhydroxid enthält.

9. Verwendung nach wenigstens einem der vorangehenden Ansprüche, wobei ein Molverhältnis von Aluminium zu Sulfat der Aluminiumsulfatsuspension < 0.7, insbesondere 2:3, beträgt.

10. Verwendung nach wenigstens einem der vorangehenden Ansprüche, wobei die Aluminiumsulfatsuspension, bezogen auf das Gesamtgewicht der Aluminiumsulfatsuspension, einen Anteil an Wasser von 30 - 80 Gew.-%, insbesondere 40 - 70 Gew.-%, bevorzugt 50 - 65 Gew.-%, aufweist, wobei Kristallwasser der Komponenten der Aluminiumsulfatsuspension mitgerechnet wird.

11. Verwendung nach wenigstens einem der vorangehenden Ansprüche, wobei die Magnesiumverbindung zur Reduktion der Viskosität in Kombination mit einer Calciumverbindung eingesetzt wird.

12. Verwendung nach wenigstens einem der vorangehenden Ansprüche, wobei die Calciumverbindung ein Oxid, Hydroxid, Carbonat, Nitrat, Sulfat, Phosphat, Halogenid, Formiat, Acetat und/oder Citrat ist.

13. Verwendung nach wenigstens einem der vorangehenden Ansprüche, wobei die Calciumverbindung Calciumcarbonat, Calciumoxid und/oder Calciumhydroxid ist.

14. Verwendung nach wenigstens einem der vorangehenden Ansprüche, wobei eine Menge der Calciumverbindung derart gewählt wird, dass die Calciumatome, bezogen auf das Gesamtgewicht der Aluminiumsulfatsuspension, einen Anteil von 0.001 - 4 Gew.-%, bevorzugt 0.01 - 2 Gew.-%, insbesondere 0.07 - 1.4 Gew.-%, im Speziellen 0.1 - 0.7 Gew.-%, aufweisen.

15. Erstarrungs- und/oder Erhärtungsbeschleuniger für ein mineralisches Bindemittel, insbesondere ein Spritzbetonbeschleuniger, umfassend:
a) 22 - 46 Gew.-%, insbesondere 28 - 43 Gew.-%, bevorzugt 34 - 41 Gew.-%, Aluminiumsulfat (Al₂(SO₄)₃;
b) optional 0.01 - 15 Gew.-%, insbesondere 0.05 - 5 Gew.-%, besonders bevorzugt 0.1 - 2 Gew.-%, Aluminiumhydroxid (Al(OH)₃);
c) 0.035 - 10.4 Gew.-%, bevorzugt 0.07 - 6.9 Gew.-%, besonders bevorzugt 0.5 - 3.5 Gew.-%, im Speziellen 1 - 3 Gew.-% Magnesiumoxid;
d) optional 0.001 - 5 Gew.-%, insbesondere 0.1 - 2 Gew.-%, im Speziellen 0.2 - 1 Gew.-%, Calciumoxid;
e) optional 0.001 - 10 Gew.-%, insbesondere 0.1 - 5 Gew.-%, im Speziellen 0.2 - 2 Gew.-%, ganz besonders bevorzugt 0.1 - 0.6 Gew.-% Eisen;
f) optional 0.001 bis 5 Gew.-%, bevorzugt 0.1 bis 2 Gew.-%, noch mehr bevorzugt 0.2 bis 1 Gew.-%, Siliziumdioxid;
g) optional 0.001 - 20 Gew.-%, insbesondere 0.1 - 8 Gew.-%, im Speziellen 0.2 - 4 Gew.-%, eines Alkalialuminats und/oder eines Erdalkalialuminats, insbesondere Lithiumaluminat, Natriumaluminat und/oder Calciumaluminat;
h) optional 0.1 - 15 Gew.-%, bevorzugt 0.1 - 5 Gew.-%, im Speziellen 0.2 - 2 Gew.-%, Alkanolamin;
i) optional 0.01 - 10 Gew.%, insbesondere 0.1 - 2 Gew.-%, bevorzugt 0.2 - 0.5 Gew.% Fluorid;
j) 30 - 80 Gew.-%, insbesondere 40 - 70 Gew.-%, bevorzugt 50 - 65 Gew.-%, Wasser.
